Europäisches Patentamt

European Patent Office

Office européen des brevets

(11) Numéro de publication : **0 332 527 B1**

(12) **FASCICULE DE BREVET EUROPEEN**

(19)

(45) Date de publication du fascicule du brevet :
**04.11.92 Bulletin 92/45**

(51) Int. Cl.⁵ : **B62D 33/04,** B62D 33/077

(21) Numéro de dépôt : **89400629.5**

(22) Date de dépôt : **06.03.89**

(54) **Perfectionnement aux carrosseries du type fourgons bâchés.**

(30) Priorité : **07.03.88 FR 8803084**

(43) Date de publication de la demande :
**13.09.89 Bulletin 89/37**

(45) Mention de la délivrance du brevet :
**04.11.92 Bulletin 92/45**

(84) Etats contractants désignés :
**AT BE CH DE ES FR GB GR IT LI LU NL SE**

(56) Documents cités :
**DE-A- 2 607 396
DE-U- 1 798 098
GB-A- 2 091 650
US-A- 3 558 184
US-A- 3 882 592**

(73) Titulaire : **S E G SOCIETE ANONYME
Allée du Pont Noget
F-85200 Fontenay le Comte (FR)**

(72) Inventeur : **Jeanson, René
Auzay
F-85200 Fontenay le Comte (FR)**
Inventeur : **Boeuf, Gérard
14 rue de la Maréchaussée
F-17230 Marans (FR)**
Inventeur : **Mornet, Philippe
Le Bourg
F-85200 Fontenay le Comte (FR)**

(74) Mandataire : **Phélip, Bruno et al
c/o Cabinet Harlé & Phélip 21, rue de La
Rochefoucauld
F-75009 Paris (FR)**

Jouve, 18, rue Saint-Denis, 75001 PARIS

## Description

La présente invention concerne un perfectionnement aux carrosseries du type fourgons bâchés, telles qu'on les trouve par exemple sur des semi-remorques.

Ces carrosseries sont constituées d'une face avant, d'un cadre arrière avec portes et d'un toit tôlé ou non, comportant deux longerons, ou rails, latéraux.

La confection de ces carrosseries s'effectue habituellement d'une manière globale par une suite d'opérations d'assemblage des différents éléments au châssis de la semi-remorque tout d'abord, puis des principaux éléments entre eux. Lorsque toute la carrosserie a été assemblée, elle passe alors en peinture et en finition.

Les carrosseries habituelles forment un tout, ce qui présente des inconvénients tant en fabrication, qu'en réparation à la suite d'incidents ou d'accidents plus ou moins graves ayant endommagé ladite carrosserie.

On connaît également, comme décrit dans le document US-A-3 882 592, des carrosseries semblables à celle selon le préambule de la revendication 1, constituées d'éléments préfabriqués dont l'assemblage a été simplifié. Dans le document en question, ces éléments et notamment la paroi arrière et le toit, comportent chacun une rainure longitudinale ; ces deux rainures sont complémentaires l'une de l'autre et elles s'emboîtent et se verrouillent par basculement et pivotement.

Ces structures évitent la pose de rivets ou autres et permettent théoriquement un assemblage plus rapide du toit sur la paroi arrière ; l'assemblage sur la paroi avant s'effectue normalement par rivetage ou autre.

Une telle structure présente toutefois plusieurs inconvénients. Tout d'abord, des rainures d'assemblage mâle-femelle sont d'une réalisation assez complexe et coûteuse ; la mise en concordance de ces structures, lors de l'assemblage est une opération délicate ; en cas d'avarie, ce genre d'assemblage est pratiquement indémontable.

La présente invention a pour but de remédier à ces inconvénients en proposant une carrosserie constituée d'éléments plus commodes à réaliser. La carrosserie selon l'invention présente aussi l'avantage de pouvoir être beaucoup plus facilement réparée en cas d'accident.

Le but de l'invention est résolu par les caractéristiques techniques mentionnées dans la partie caractérisante de la revendication indépendante 1.

L'invention a principalement pour objet une carrosserie constituée de trois éléments principaux : une face avant, une face arrière et un toit, ces trois éléments sont réalisés séparément puis assemblés ensemble, par des moyens de fixation rapide et démontables ; la face avant est boulonnée sur la partie avant du châssis du véhicule ; la face arrière est boulonnée également, sur la partie arrière du châssis du véhicule ; le toit est ensuite solidarisé, au moyen de tenons, aux faces avant et arrière.

Toujours selon l'invention, le toit comporte, à l'avant, dans ses angles, deux tenons verticaux qui s'emmanchent dans les montants du panneau avant ; en outre, suivant la revendication 2, la traverse avant du toit comporte une rainure qui vient coiffer la partie supérieure des panneaux constituant la face avant, entre les deux montants.

Selon un mode de réalisation de l'invention, le toit comporte, à l'arrière, dans ses angles, deux tenons qui s'emmanchent dans les montants latéraux de la face arrière.

Toujours selon un mode de réalisation de l'invention, les montants avant et arrière sont boulonnés sur le cadre du châssis du véhicule ; ils comportent à cet effet des renforts internes insérés dans les creux des profilés constituant ces montants.

Selon un autre mode de réalisation de l'invention, le cadre du châssis comporte des angles préfabriqués, en forme d'équerres, sur lesquels se fixent les rives et brancards mais aussi les montants de la carrosserie. Ces angles comportent également des moyens de fixation du plancher du châssis.

Suivant un autre mode de réalisation de l'invention, on prévoit également la liaison entre les montants de la face arrière et les portes constituant cette face arrière. Cette liaison s'effectue au moyen de charnières à deux axes verticaux parallèles, l'un des axes étant sur le montant, l'autre sur la porte ; les deux axes étant reliés par une pièce charnière.

La pièce charnière selon ledit mode est constituée d'un tronçon de profilé permettant de réduire de façon notable le coût dudit élément.

Pour une même liaison porte-montant, on dispose deux paires de charnières : une paire de charnières pour la partie basse, une paire de charnières pour la partie haute, chaque paire comportant une tige de solidarisation des deux charnières entre elles ; cette tige servant en même temps d'axe auxdites charnières dans le montant.

Suivant un autre mode de réalisation de l'invention, on prévoit également un système de fermeture et de verrouillage des portes de la face arrière. Ce système de fermeture et de verrouillage est principalement constitué de deux pènes, l'un à la partie haute de la porte, l'autre disposé en partie basse, les deux étant reliés par un axe vertical qui s'étend sur toute la hauteur et à l'intérieur même de la porte ; les deux pènes sont commandés par une poignée disposée en partie basse de la porte. La caractéristique de ces deux pènes est d'être décalés l'un par rapport à l'autre de façon à agir l'un après l'autre ; le pène du haut fait un angle compris entre 5 et 10° par rapport au pène du bas de façon à agir en avance par rapport au pène du bas et de bénéficier ainsi en permanence, de l'élasticité de l'axe vertical de liaison, pour maintenir une pression plus importante sinon au moins égale à celle du bas.

L'invention sera encore illustrée à l'aide de la description suivante et des dessins annexés, donnés à titre indicatif, et dans lesquels :

- la figure 1 est une vue générale d'une semi-remorque comportant une carrosserie du type fourgon bâché ;
- la figure 2 représente les différents éléments constitutifs de la carrosserie ;
- la figure 3 représente le montant de la face avant de la carrosserie dans sa partie haute ;
- la figure 4 représente le montant de la face avant, dans sa partie basse ;
- la figure 5 représente le montant de la face arrière avec une portion de porte ;
- la figure 6 représente en coupe, une charnière selon l'invention ;
- la figure 7 représente la charnière en vue de face disposée horizontalement, munie de ses axes de liaison ;
- la figure 8 représente le système de fermeture et de verrouillage de l'une des portes de la face arrière ;
- la figure 9 représente, en vue de dessus, le système de fermeture et de verrouillage d'une porte ;
- la figure 10 est une vue en perspective de l'angle avant du châssis;
- la figure 11 est une vue de dessus de l'angle de la figure 10 ;
- la figure 12 est une coupe selon 12-12 de la figure 11 ;
- la figure 13 est une coupe selon 13-13 de la figure 11.

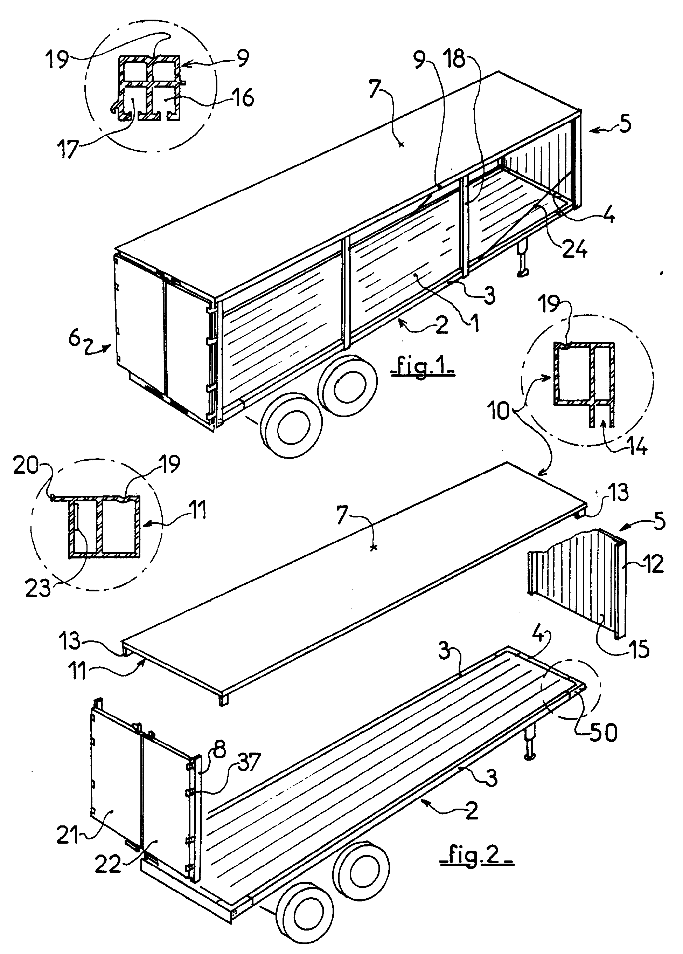

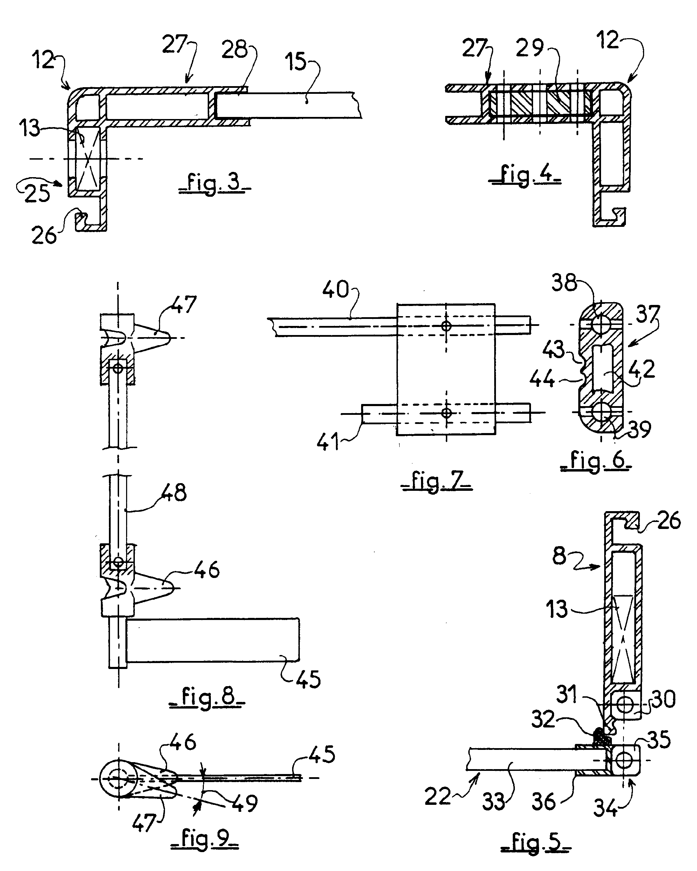

Tel que représenté figure 1, le véhicule est du genre semi-remorque ; il comporte un plateau 1 ou plancher enserré dans un châssis 2 constitué de longerons 3 et de traverses 4 encore appelées rives ou brancards. Ce véhicule est équipé d'une carrosserie constituée d'une face avant 5, d'une face arrière 6 et d'un toit 7. La face avant 5, détaillée plus loin figures 3 et 4, est essentiellement constituée d'un panneau obtenu par assemblage de lames verticales.

La face arrière 6 est constituée principalement de deux ou plusieurs portes articulées sur des montants latéraux 8.

Le toit 7 est constitué principalement de deux longerons 9, d'une traverse avant 10 et d'une traverse arrière 11, montrés sous forme de section agrandie, dans des encadrés circulaires.

La figure 2 montre les trois éléments détachés, constituant la carrosserie, à savoir : la face avant 5, la face arrière 6 et le toit 7. Ces trois éléments sont préparés séparément avant d'être assemblés sur un châssis de véhicule. Ils peuvent en particulier être totalement préparés c'est-à-dire se présenter à l'état de produits finis et être livrés comme tels. Chaque élément peut être notamment peint avant montage. Ceci permet de livrer l'ensemble des éléments sans être montés sur le châssis ; cette opération étant réalisable par le destinataire. Ceci permet également de livrer l'un quelconque de ces éléments pour réaliser par exemple une réparation de carrosserie.

Les faces avant 5 et arrière 6 sont boulonnées sur le châssis 2 du véhicule. Les montants 8 de la face arrière 6 sont boulonnés latéralement, à l'extrémité arrière des longerons 3. Les montants 12 de la face avant 5 sont boulonnés, par exemple, sur la traverse avant 4 du châssis 2.

Le toit 7 vient s'emboîter sur les faces avant 5 et arrière 6 après la mise en place de ces dernières sur le châssis 2 du véhicule. L'assemblage s'effectue au moyen de quatre tenons 13 disposés à chaque angle du toit 7. Ces tenons 13, en forme de barreaux verticaux, se positionnent dans chaque montant 8 et 12 des faces arrière 6 et avant 5 respectivement.

La traverse avant 10 du toit 7 comporte une rainure 14 qui s'emboîte sur la partie supérieure du panneau 15 constituant la face avant 5, de façon à rigidifier ce dernier.

La traverse arrière 11 du toit 7 assure la rigidification supérieure de la face arrière 6 ; cette traverse 11 peut être prévue amovible lorsque le toit 7 est un toit découvrable.

Dans chacun des encadrés, figures 1 et 2, on a représenté en coupe les profilés du cadre du toit 7. Le longeron 9 est constitué d'un profilé de section sensiblement carrée comportant, à sa partie inférieure, deux rails de guidage 16 et 17 ; le rail 16 coopérant avec des poteaux 18 servant au support du toit, interposés entre ce dernier et le châssis 2 ; le rail 17 est plus particulièrement destiné à recevoir, par exemple, un rideau d'obturation de la face latérale du véhicule.

Par ailleurs, le longeron 9 comporte à sa partie supérieure, une rainure longitudinale en forme de creux 19 destinée à recevoir un joint d'étanchéité qui s'écrase lors de la mise en place des panneaux de toiture, non représentés, lesquels panneaux sont, de façon classique, rivetés sur le longeron 9.

On retrouve de la même façon, sur les traverses avant 10 et arrière 11, une rainure 19 recevant un joint d'étanchéité. La section de ces traverses 10 et 11 est sensiblement carrée. La traverse avant 10 comporte cependant deux arêtes vers l'avant, formant une rainure qui s'encastre sur le panneau 15 constituant la face avant ; cette rainure permet une rigidification dudit panneau 15.

La traverse arrière 11 comporte un prolongement 20 vers l'arrière qui recouvre la partie supérieure des portes 21 et 22 constituant la face arrière 6. On remarque, dans l'encadré, sur la traverse arrière 11, les points d'ancrage renforcés 23 du système de fermeture et de verrouillage des portes.

Sur la figure 1 on a représenté un câble de tension 24 interposé entre la face avant 5 et le longeron 3 du châssis 2 ; un tel câble, démontable, est disposé de chaque côté du châssis 2 de façon à apporter une rigidification notable de la face avant 5.

La figure 3 représente, en coupe, la partie haute du montant 12 de la face avant 5. Ce montant 12 est un profilé en forme d'équerre. Ce profilé creux reçoit dans son aile 25, le tenon 13 solidaire du toit 7. Ce tenon 13 est de préférence boulonné sur le montant 12. On remarque encore, sur cette aile 25 du profilé, une forme 26 en crochet permettant l'arrimage de la bâche latérale de la carrosserie, par exemple.

L'autre aile en équerre 27 du profilé, se termine par une rainure 28 verticale dans laquelle s'insère la bordure du panneau 15 constituant la face avant.

La figure 4 représente, en coupe, la partie inférieure du montant 12. L'aile 27 de ce profilé comporte un renfort ou insert 29 qui permet de renforcer ledit profilé au niveau de son assemblage sur la traverse avant 4 du châssis 2 du véhicule ; cet assemblage s'effectuant par boulonnage par exemple.

On a représenté, figure 5, le montant 8 de la face arrière et une partie de la porte 22. Le montant 8 comporte lui aussi à son extrémité, une forme de crochet 26 sur laquelle pourra se fixer la bâche latérale du véhicule. Il comporte, comme représenté figure 4, pour le montant 12, dans sa partie basse, non représenté, un insert de renfort pour sa fixation sur le longeron 3 du châssis du véhicule.

Le montant 8 reçoit, à sa partie supérieure, à l'intérieur du profilé, le tenon 13 solidaire du toit 7 ; ce tenon est boulonné sur ledit montant 8.

La partie arrière du montant, plus épaisse, comporte des évidements 30 destinés à recevoir les charnières représentées figures 6 et 7. Ces évidements 30, tels qu'ils apparaissent figures 1 et 2, sont au nombre de quatre, répartis sur la hauteur du montant pour recevoir, quatre charnières. Le montant 8 se termine, à l'arrière, par une aile verticale 31 qui coopère avec le joint 32 de la porte.

La porte 22 est constituée d'un panneau 33 et d'un profilé 34 dans lequel sont taillés des évidements 35 pour les charnières ; il comporte également une rainure 36 dans laquelle s'inscrit le panneau 33 constituant la porte.

On a représenté, figures 6 et 7, une des charnières de liaison entre le montant 8 et la porte 21 ou 22. La charnière 37 est constituée d'un tronçon de profilé, lequel tronçon comporte deux trous 38 et 39 pour le passage des axes 40 et 41, un évidement central d'allègement 42 et des rainures 43 et 44 qui permettent, respectivement, le blocage de la charnière sur l'aile verticale 31 du montant et le positionnement du joint 32 entre cette aile 31 et la porte.

Les axes 40 et 41 sont chevillés sur la charnière 37. L'axe 41 se positionne dans le profilé 34 de la porte. L'axe 40 se positionne dans le profilé du montant 8. Cet axe 40 est commun à deux charnières 37. Les charnières 37 sont en effet groupées par paires de façon à assurer une meilleure rigidité de la porte par rapport au montant 8 ; le montage des charnières 37 par paires permet également d'adopter toujours une même longueur d'axe 40 quelle que soit la hauteur des portes de la face arrière.

On a également représenté, figures 8 et 9, le système de fermeture et de verrouillage des portes arrière. Ce système de fermeture comporte une poignée de manoeuvre 45, un premier pène 46, disposé à la partie basse de la porte 21 ou 22, un deuxième pène 47, disposé à la partie supérieure des portes et, interposé entre les deux pènes un axe de liaison 48 disposé verticalement à l'intérieur du panneau de chacune des portes.

Pour permettre un meilleur verrouillage de chaque porte par rapport au cadre, le pène supérieur 47 est légèrement incliné par rapport au pène inférieur 46, de façon à agir en premier et à bénéficier de l'élasticité de l'axe 48 de liaison pour conserver une pression légèrement supérieure sinon au moins égale à celle du pène 46. L'angle 49 du pène 47 par rapport au pène 46 est de l'ordre de 5 à 10°, figure 9.

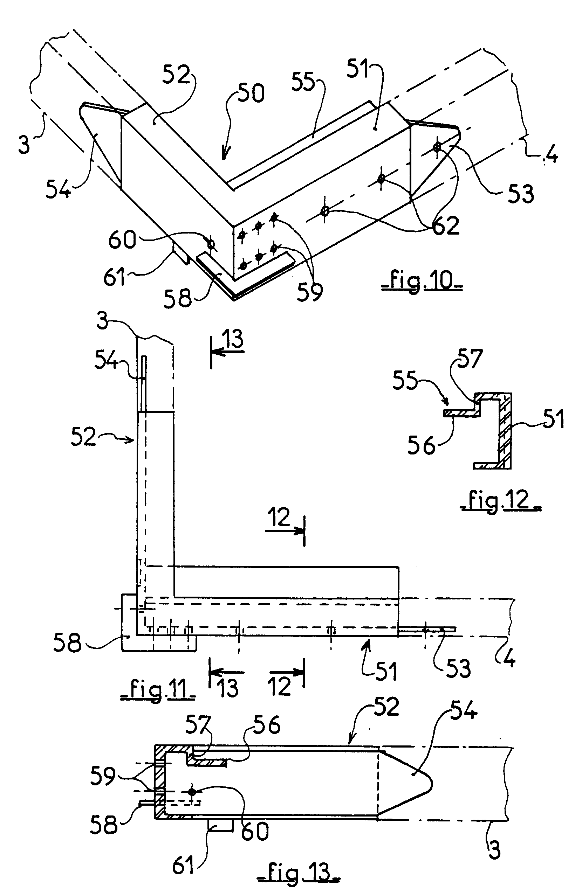

On a représenté en détail, figures 10 à 13, l'angle avant 50 droit du châssis 1 qui apparaît dans l'encadré de la figure 2. Le cadre du châssis 2, constitué des longerons 3 et traverses 4 comporte des angles préfabriqués sur lesquels sont prévus les différents moyens nécessaires à la fixation des montants, du plancher et des équipements éventuels comme les feux de gabarit.

L'angle 50 représenté figures 10 à 13 est en forme d'équerre dont les branches 51, 52 sont du même ordre de grandeur. Ces branches 51, 52 prolongent le longeron 3 et la traverse 4 plus communément appelés rives ou brancards. Ces longerons ou traverses ont une section en U ; ils sont positionnés par rapport aux extrémités des branches 51 et 52 grâce à des tenons 53, 54 de forme triangulaire qui sont en saillie aux extrémités desdites branches 51 et 52. Ces tenons 53, 54 s'appliquent à l'intérieur du U des rives et sont soudés sur ces dernières ainsi que l'extrémité des rives sur celles des branches 51 et 52.

Les branches 51 et 52 de l'angle 50 ont également une section en U.

On remarque, sur la branche 51, côté interne, un décrochement 55 vers le bas, en forme d'équerre à partir de la face supérieure, figure 12 ; ce décrochement 55 comporte une semelle 56, sur laquelle repose le plancher 1, non représenté, du châssis 2. La semelle 56 s'étend sur toute la longueur de la branche 51 ; elle est reliée à ladite branche par une aile verticale 57, et en particulier à la face supérieure de cette branche 51.

On remarque encore figures 10 à 13, un pied support 58 qui s'étend horizontalement de part et d'autre de la jonction des branches 51 et 52. Ce pied support 58 est destiné à faciliter le positionnement du montant lors de sa mise en place sur le châssis. L'angle 50 comporte des trous 59 pour la fixation de la partie basse du montant. Dans le cas de la figure 10, les trous de fixation 59 sont disposés sur la face avant du châssis ; dans le cas d'un angle 50 recevant des montants arrière, les trous 59 sont disposés latéralement, c'est-à-dire du côté des longerons 3.

Un trou complémentaire 60 est représenté figure 10, pour fixer de façon complémentaire l'autre aile du montant avant.

On remarque encore figures 10 et 13, une patte 61 disposée sous la branche 52 ; cette patte 61 est destinée à recevoir un feu de gabarit.

Sur la branche 51, on a fait figurer des trous 62 ; ces trous sont destinés à la fixation de la face avant 5 de la carrosserie.

Dans l'exemple de réalisation décrit, le châssis 2 comporte à ses quatre coins un angle du type de celui des figures 10 à 13. Les angles sont de préférence préfabriqués, réalisés par un moulage, en alliage léger par exemple.

On peut également prévoir de réaliser par exemple toute la traverse, avant ou arrière, d'une seule pièce selon le même principe que les angles, pour faciliter encore le montage du châssis.

Les signes de référence insérés après les caractéristiques techniques mentionnées dans les revendications ont pour seul but de faciliter la compréhension de ces dernières, et n'en limitent aucunement la portée.

**Revendications**

1.- Carrosserie pour véhicules du type fourgons bâchés, constituée de trois éléments principaux : une face avant (5) fixée sur la partie avant du châssis (2) du véhicule, une face arrière (6) fixée sur la partie arrière dudit châssis (2), et un toit (7), cette carrosserie comportant des moyens d'assemblage rapide et démontables desdits trois éléments, caractérisée en ce que le toit (7) comporte des moyens de liaison en forme de tenons (13) disposés à chacun de ses angles, permettant un emmanchement dans les montants (12) de la face avant (5) et les montants (8) de la face arrière (6).

2.- Carrosserie pour véhicules du type fourgons bâchés selon la revendication 1, caractérisée en ce que le toit (7) comporte une traverse avant (10) munie, sur sa partie inférieure, d'une rainure (14) destinée à s'emmancher sur le panneau (15) constituant la face avant entre les deux montants (12).

3.- Carrosserie pour véhicules du type fourgons bâchés selon l'une quelconque des revendications 1 ou 2, caractérisée en ce qu'elle comporte, dans les montants avant (12) et arrière (8), à l'intérieur des creux des profilés constituant ces montants, des renforts internes ou inserts (29), au niveau de l'assemblage de ces montants sur le châssis (2) du véhicule.

4.- Carrosserie pour véhicules du type fourgons bâchés selon l'une quelconque des revendications 1 à 3, caractérisée en ce qu'elle comporte, au niveau de la face arrière (6), des charnières (37) du type à deux axes verticaux (40, 41), interposées entre ledit montant (8) et chaque porte arrière (21 ou 22), lesdites charnières étant constituées d'un tronçon de profilé.

5.- Carrosserie pour véhicules du type fourgons bâchés selon la revendication 4, caractérisée en ce qu'elle comporte deux paires de charnières (37) : une paire de charnières pour la partie haute de la porte et une paire de charnières pour la partie basse ; chaque paire de charnières (37) comportant une tige de solidarisation (40) des deux charnières (37) entre elles, laquelle tige (40) sert en même temps d'axe auxdites charnières (37) dans le montant (8).

6.- Carrosserie pour véhicules du type fourgons bâchés selon l'une quelconque des revendications 1 à 5, caractérisée en ce qu'elle comporte un système de fermeture et de verrouillage des portes de la face arrière constitué de deux pènes (46 et 47), l'un disposé à la partie basse de la porte, l'autre disposé en partie haute, les deux étant reliés par un axe vertical (48) qui s'étend sur toute la hauteur et à l'intérieur même de la porte, lesquels pènes sont décalés l'un par rapport à l'autre : le pène supérieur (47) faisant un angle compris entre 5 et 10° par rapport au pène inférieur (46), de façon à agir en avance par rapport audit pène inférieur (46) et de bénéficier ainsi en permanence, de l'élasticité de l'axe vertical de liaison (48).

7.- Carrosserie pour véhicules du type fourgons bâchés selon l'une quelconque des revendications 1 à 6, caractérisée en ce qu'elle comporte, interposé entre l'un au moins des montants (12) de la face avant (5) et le longeron (3) du châssis (2), un câble de tension (24) permettant une rigidification de ladite carrosserie.

8.- Carrosserie pour véhicules du type fourgons bâchés selon l'une quelconque des revendications 1 à 7, caractérisée en ce qu'elle comporte, aux quatre coins du châssis (2), des angles (50) préfabriqués sur lesquels sont assemblés les longerons (3) et traverses (4) ; ces angles (50) se présentent sous la forme d'équerres et comportent des moyens permettant l'assemblage des montants correspondants et la fixation du plancher (1) dudit châssis (2), lesquels moyens sont constitués d'un pied support (58) et de trous (59) pour le montant, d'une semelle interne (56) pour le plancher (1).

9.- Carrosserie pour véhicules du type fourgons bâchés selon la revendication 8, caractérisée en ce que les branches (51) et (52) de l'angle (50) comportent à leurs extrémités des tenons (53) et (54) de forme triangulaire, lesquels sont soudés sur l'aile interne des longerons (3) et traverses (4).

## Patentansprüche

1. Karosserie für ein Sattelauflieger-Fahrzeug mit Plane, bestehend aus drei Hauptteilen: einer auf dem Vorderteil des Rahmens (2) des Fahrzeugs befestigten Vorderwand (5), einer am hinteren Teil des Rahmens (2) befestigten Rückwand (6) und einem Dach (7) und umfassend Mittel zum schnellen Zusammenbau und Abbau der drei Hauptteile, dadurch gekennzeichnet, daß das Dach (7) Verbindungselemente in Form von an jedem Winkel angeordneten Zapfen (13) zum Einstecken in die Ständer (12) der Vorderwand (5) und die Ständer (8) der Rückwand (6) aufweist.

2. Karosserie nach Anspruch 1, dadurch gekennzeichnet, daß das Dach (7) eine vordere Traverse (10) aufweist, die an ihrer Innenseite eine Nut (14) zum Aufstecken auf die die Vorderwand zwischen den beiden Ständern (12) bildende Tafel (15) aufweist.

3. Karosserie nach Anspruch 1 oder 2, dadurch gekennzeichnet, daß die vorderen Ständer (12) und hinteren Ständer (8) in den Innenhohlräumen der sie bildenden Profile im Bereich der Verbindung der Ständer mit dem Rahmen (2) des Fahrzeugs innere Verstärkungen oder Einsätze (29) aufweisen.

4. Karosserie nach wenigstens einem der Ansprüche 1 bis 3, dadurch gekennzeichnet, daß sie an der Rückwand (6) Scharniere (37) mit zwei vertikalen Achsen (40,47) aufweist, die zwischen jedem Ständer (8) und jeder hinteren Tür (21,22) angeordnet sind und aus einem Profilabschnitt bestehen.

5. Karosserie nach Anspruch 4, gekennzeichnet durch zwei Scharnierpaare (37), eines für den Oberteil der Tür und eines für den Unterteil, von denen jedes eine Verbindungsstange (40) zur Verbindung der beiden Scharniere (37) miteinander aufweist, die außerdem als Achse der Scharniere (37) in dem Ständer (8) dient.

6. Karosserie nach wenigstens einem der Ansprüche 1 bis 5, gekennzeichnet durch ein System zum Verschließen und Verriegeln der Türen der Rückwand, bestehend aus zwei Riegeln (46 und 47), von denen der eine an dem Unterteil der Tür, der andere an deren Oberteil angeordnet ist und die beide durch eine vertikale Achse (48) miteinander verbunden sind, die sich über die ganze Höhe an der Innenseite der Tür erstreckt, wobei diese Riegel (46,47) gegeneinander versetzt sind und der obere Riegel (47) in einen Winkel zwischen 5 und 10° gegenüber dem unteren Riegel (46) derart versetzt ist, daß er vor dem unteren Riegel (46) wirksam wird und auf diese Weise dauernd die Elastizität der vertikalen Verbindungsachse (48) wirksam werden läßt.

7. Karosserie nach wenigstens einem der Ansprüche 1 bis 6, dadurch gekennzeichnet, daß zwischen wenigstens einem Ständer (12) der Vorderwand (5) und den Längsholmen (3) des Rahmens (2) ein zur Versteifung der Karosserie dienendes Spannkabel (24) angeordnet ist.

8. Karosserie nach wenigstens einem der Ansprüche 1 bis 7, dadurch gekennzeichnet, daß an vier Ecken des Rahmens (2) vorgefertigte Winkelstücke (50), an denen die Längsholme (3) und Traversen (4) montiert sind, und daß diese Winkelstücke (50) die Form von Winkeln aufweisen und Elemente zum Zusammenbau der Ständer und zur Befestigung des Bodens (1) des Rahmens (2) bilden, wobei die Elemente aus einem Stützfuß (58) und Löchern (59) für den Ständer und einen Innenschuh (56) für den Boden (1) bestehen.

9. Karosserie nach Anspruch 8, dadurch gekennzeichnet, daß die Schenkel (51 und 52) des Winkelstücks (50) an ihren Enden Zapfen (53 und 54) in Dreieckform aufweisen, die an dem Innenflansch der Längsholme (4) und Traversen (4) angeschweißt sind.

## Claims

1. Body for vehicles of the tarpaulin-sided vans type, consisting of three main components: a front face (5) fastened onto the front part of the chassis (2) of the vehicle, a rear face (6) fastened onto the rear part of the said chassis (2), and a roof (7), said body comprising removable means for quick assembly of the said three components, characterized in that the roof (7) has joining means in the form of tenons (13) arranged at each of its corners allowing them to be fitted into the stanchions (12) of the front face (5) and the stanchions (8) of the rear face (6).

2. Body for vehicles of the tarpaulin-sided vans type according to Claim 1, characterized in that the roof (7) has a front cross-member (10) equipped, on its lower part, with a groove (14) intended to fit over the panel (15) forming the front face between the two stanchions (12).

3. Body for vehicles of the tarpaulin-sided vans type according to either of Claims 1 or 2, characterized in that it has, in the front (12) and rear (8) stanchions, inside the hollow parts of the shaped sections forming these stanchions, internal reinforcements or inserts (29) in the region of the assembly of these stanchions on the chassis (2) of the vehicle.

4. Body for vehicles of the tarpaulin-sided vans type according to any one of Claims 1 to 3, characterized in that it has, in the region of the rear face (6), hinges (37) of the type having two vertical axes (40, 41) placed between the said stanchion (8) and each rear door (21 or 22), the said hinges being formed from a length of shaped section.

5. Body for vehicles of the tarpaulin-sided vans type according to Claim 4, characterized in that it has two pairs of hinges (37): one pair of hinges for the upper part of the door and one pair of hinges for the lower part; each pair of hinges (37) having a rod (40) for mutually integrating the two hinges (37), which rod (40) at the same time serves as an axis for the said hinges (37) in the stanchion (8).

6. Body for vehicles of the tarpaulin-sided vans type according to any one of Claims 1 to 5, characterized in that it has a system for closing and locking the doors of the rear face consisting of two bolts (46 and 47), one arranged in the lower part of the door, the other arranged in the upper part, the two of them being connected by a vertical shaft (48) which extends over the entire height and on the very inside of the door, which bolts are offset relative to each other: the upper bolt (47) forming an angle of between 5 and 10° relative to the lower bolt (46), so as to act in advance relative to the said lower bolt (46) and thus to benefit permanently from the resilience of the vertical linking shaft (48).

7. Body for vehicles of the tarpaulin-sided vans type according to any one of Claims 1 to 6, characterized in that it has, placed between at least one of the stanchions (12) of the front face (5) and the side member (3) of the chassis (2), a tensioning cable (24) allowing the said body to be strengthened.

8. Body for vehicles of the tarpaulin-sided vans type according to any one of Claims 1 to 7, characterized in that it has, at the four corners of the chassis (2), prefabricated corner pieces (50) on which the side members (3) and cross-members (4) are assembled; these corner pieces (50) have a right-angled shape and have means allowing the corresponding stanchions to be assembled and the floor (1) of the said chassis (2) to be fastened, which means consist of a base plate (58) and holes (59) for the stanchion, and of an inner flange (56) for the floor (1).

9. Body for vehicles of the tarpaulin-sided vans type according to Claim 8, characterized in that the arms (51) and (52) of the corner piece (50) have at their ends triangular-shaped tenons (53) and (54), which are welded onto the inner side of the side members (3) and cross-members (4).

_fig.1_

_fig.2_

_fig.3_

_fig.4_

_fig.7_

_fig.6_

_fig.8_

_fig.9_

_fig.5_

_fig.10_

_fig.11_

_fig.12_

_fig.13_